# EUROPÄISCHE PATENTSCHRIFT

(11) **EP 1 709 291 B1**
(45) Veröffentlichungstag und Bekanntmachung des Hinweises auf die Patenterteilung: **08.07.2015**
(21) Anmeldenummer: 05707073.2
(22) Anmeldetag: 28.01.2005
(51) Int. Cl.: E21B 43/02, C09D 183/04

(54) **KONSOLIDIERUNGSMITTEL UND DESSEN VERWENDUNG ZUR KONSOLIDIERUNG VON FORMKÖRPERN UND GEOLOGISCHEN FORMATIONEN AUS PORÖSEN ODER PARTIKULÄREN MATERIALIEN**
CONSOLIDATION AGENTS AND THE USE THEREOF FOR CONSOLIDATING MOULDED BODIES AND GEOLOGICAL FORMATIONS CONSISTING OF POROUS OR PARTICULATE MATERIALS
AGENTS DE CONSOLIDATION ET LEUR UTILISATION POUR CONSOLIDER DES CORPS MOULES ET DES FORMATIONS GEOLOGIQUES EN MATERIAUX POREUX OU PARTICULAIRES

(30) Priorität: 29.01.2004 DE 102004004615
(43) Veröffentlichungstag der Anmeldung: 11.10.2006
(73) Patentinhaber: Leibniz-Institut für Neue Materialien gemeinnützige GmbH, 66123 Saarbrücken (DE)
(72) Erfinder: ENDRES, Klaus, 66424 Homburg (DE); SCHMIDT, Helmut, 66130 Saarbrücken-Güdingen (DE); REINHARD, Bernd, 66663 Merzig-Brotdorf (DE)
(74) Vertreter: Patentanwälte Gierlich & Pischitzis Partnerschaft
(86) Internationale Anmeldenummer: PCT/EP2005/000871
(87) Internationale Veröffentlichungsnummer: WO 2005/073278

(56) Entgegenhaltungen:
- EP-A- 0 075 962
- EP-A- 0 273 867
- US-A- 4 417 623
- US-A1- 2001 024 719

## Beschreibung

Die Erfindung betrifft eine Zusammensetzung zum Konsolidieren von Formkörpern und geologischen Formationen aus porösen oder partikulären Materialien.

Die Herstellung von Kompositwerkstoffen aus partikulären Systemen mit geeigneten Bindemitteln ist insbesondere dann schwierig, wenn die Kompositwerkstoffe im Vergleich zur bindemittelfreien Schüttung nicht nennenswert an Porosität einbüßen sollen. So lassen sich z. B. mit organischen Polymerbindemitteln poröse Komposite herstellen, jedoch zeigt sich, dass es kaum möglich ist, die ursprüngliche Porosität aufrecht zu erhalten. Bei reduziertem Bindemitteleinsatz gelingt es zwar poröse Systeme herzustellen, aufgrund der Eigenschaft der organischen Polymere in Gegenwart von organischen Lösungsmitteln aufzuquellen oder in Lösung zu gehen, sind solche Komposite jedoch für viele Anwendungen, insbesondere bei höheren Temperaturen und in Umgebung organischer Flüssigkeiten, nicht geeignet.

Die Verwendung von rein anorganischen Bindemitteln, die z. B. über den Sol-Gel Prozess zugänglich sind, führt zwar zu einer Bindung, bei der im Formkörper eine entsprechende Porosität aufrecht erhalten wird, jedoch ist das gebundene System sehr spröde, brüchig und gegenüber mechanischen Belastungen wie Scherbelastungen oder starken Druckbelastungen nicht ausreichend widerstandsfähig.

Ein Spezialgebiet der Konsolidierung von partikulären Materialien ist die Erdölförderung, bei der Bohrlöcher oft in nicht-konsolidierte geologische Formationen vorgetrieben werden. Insbesondere bei der Off-shore-Förderung handelt es sich hierbei um sandhaltige geologische Formationen, die konsolidiert werden müssen, um ein Eindringen von Sand und anderer Gesteinspartikel in das Bohrloch mit damit verbundener Beschädigung der Förderanlagen und Verunreinigung des geförderten Erdöls zu vermeiden. Zur Konsolidierung von derartigen Sandlagerstätten wird herkömmlich ein dreistufiges Verfahren angewandt. Zunächst wird über eine Sonde ein Kunstharzbindemittel injiziert, worauf man dieses durch Injektion eines Aktivierungssystem abbindet. In einem dritten Schritt wird ein System zum Steuern der Permeabilität und zum Verdrängen von überschüssigem Harzbindemittel eingespritzt.

Aufgabe der Erfindung war es, ein Konsolidierungsmittel für Formkörper und geologische Formationen aus porösen oder partikulären Materialien, z. B. sandhaltige geologische Formationen, bereitzustellen, das eine gute Bindefestigkeit bei ausreichender Flexibilität und nicht wesentlich reduzierter Porosität ergibt und seine Bindeeigenschaften auch bei verunreinigten partikulären Materialien, insbesondere auch bei nicht entfetteten oder ölhaltigen Partikeln bewahrt.

Gegenstand der Erfindung ist ein partikelfreies Konsolidierungsmittel für Formkörper und geologische Formationen aus porösen oder partikulären Materialien, enthaltend ein Hydrolysat oder Vorkondensat von
(a) mindestens einem Organosilan der allgemeinen Formel (I)

   RₙSiX₄₋ₙ (I)

   worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1,2 oder 3, vorzugsweise 1 oder 2, hat; und
(b) mindestens einem hydrolysierbaren Silan der allgemeinen Formel (II)

   SiX₄ (II)

   worin die Reste X die vorstehende Bedeutung haben, wobei das Hydrolysat oder Vorkondensat ein Reaktionsprodukt von (a1) einem Alkylsilan, (a2) einem Arylsilan und (b) einem Orthokieselsäureester enthält.

Geeignete Beispiele für hydrolytisch abspaltbare Gruppen X sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen, Hydroxy, Alkoxy, Amino oder Epoxy, enthalten.

Bevorzugte hydrolytisch abspaltbare Reste X sind Halogen, Alkoxygruppen und Acyloxygruppen. Besonders bevorzugte hydrolytisch abspaltbare Reste sind C₂₋₄-Alkoxygruppen, insbesondere Ethoxy.

Die hydrolytisch nicht abspaltbaren Reste R sind Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkylgruppen, wie Cyclopropyl, Cyclopentyl und Cyclohexyl.

Die Reste R können übliche Substituenten aufweisen, bei denen es sich um funktionelle Gruppen handeln kann, über die nach Bedarf auch eine Vernetzung des Kondensats über organische Gruppen möglich ist. Übliche Substituenten sind z.B. Halogen (z.B. Chlor oder Fluor), Epoxid (z.B. Glycidyl oder Glycidyloxy), Hydroxy, Ether, Ester, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Alkoxy, Isocyanato, Aldehyd, Keto, Alkylcarbonyl, Säureanhydrid und Phosphorsäure. Diese Substituenten sind über zweiwertige Brückengruppen, insbesondere Alkylen- oder Arylen-Brückengruppen, die durch Sauerstoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich von den oben genannten einwertigen Alkyl- oder Arylresten ab. Natürlich kann der Rest R auch mehr als eine funktionelle Gruppe aufweisen.

Bevorzugte Beispiele für hydrolytisch nicht abspaltbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyethyl, ein (Meth)acryloxy-(C₁₋₆)-alkylen-Rest, z.B. (Meth)acryloxymethyl, (Meth)acryloxyethyl, (Meth)acryloxypropyl oder (Meth)acryloxybutyl, und ein 3-Isocyanatopropylrest. Beispiele für fluorsubstituierte Reste R sind 1H,1H,2H,2H-Perfluoroctyl oder 3,3,4,4,5,5,6,6,7,7,8,8,8-Tridecafluorooctyl. Besonders bevorzugte Reste sind γ-Glycidyloxypropyl und (Meth)acryloxypropyl. Hierbei steht (Meth)acryl für Acryl und Methacryl.

Bevorzugte Reste R sind Alkylgruppen mit vorzugsweise 1 bis 4 Kohlenstoffatomen, insbesondere Methyl und Ethyl, sowie Arylreste wie Phenyl.

Beispiele für Organosilane der allgemeinen Formel (I) sind Verbindungen der folgenden Formeln, wobei die Alkylsilane und insbesondere Methyltriethoxysilan besonders bevorzugt sind:
CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si(OC₂H₅)₃, (C₂H₅O)₃-Si-C₃H₆-Cl, (CH₃)₂SiCl₂, (CH₃)₂Si(OC₂H₅)₂, (CH₃)₂Si(OH)₂, (C₆H₅)₂SiCl₂, (C₆H₅)₂Si(OC₂H₅)₂, (i-C₃H₇)₃SiOH, CH₂=C(CH₃)COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃,

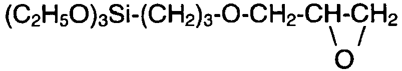

Beispiele für hydrolysierbare Silane der allgemeinen Formel (II) sind Si(OCH₃)₄, Si(OC₂H₅)₄, Si(O-n- oder i-C₃H₇)₄ und Si(OC₄H₉)₄. Von diesen hydrolysierbaren Silanen ist Tetraethoxysilan besonders bevorzugt.

Die Silane lassen sich nach bekannten Methoden herstellen; vgl. W. Noll, "Chemie und Technologie der Silicone", Verlag Chemie GmbH, Weinheim/Bergstraße (1968).

Zur Herstellung des Konsolidierungsmittels werden vorzugsweise mindestens 30 Mol-%, bevorzugter mindestens 45 Mol-% und insbesondere mindestens 55 Mol-% Organosilane der Formel (I) mit mindestens einer hydrolytisch nicht abspaltbaren Gruppe verwendet. Der Rest sind hydrolysierbare Verbindungen, insbesondere die hydrolysierbaren Silane der Formel (II), die keine hydrolytisch nicht abspaltbaren Gruppen aufweisen. Für die Berechnung von Mengenverhältnissen werden unter hydrolysierbaren Verbindungen bzw. Silanen allgemein die monomeren Verbindungen verstanden. Wenn wie nachstehend erläutert bereits vorkondensierte Verbindungen (Dimere usw.) als Ausgangsmaterialien eingesetzt werden, ist auf die entsprechenden Monomere umzurechnen.

Das Konsolidierungsmittel wird unter Verwendung eines Alkylsilans wie Methyltriethoxysilan (MTEOS), eines Arylsilans wie Phenyltriethoxysilan und eines Orthokieselsäureesters wie Tetraethoxysilan (TEOS) hergestellt.

Gegebenenfalls können für die Herstellung des Konsolidierungsmittels auch hydrolysierbare Metaliverbindungen von Elementen, die von Si verschieden sind, verwendet werden. Diese können bis zu 50 Mol% der hydrolysierbaren Silanverbindungen (II) ersetzen. Vorzugsweise handelt es sich hierbei um Metallverbindungen der allgemeinen Formel (III)

MXₐ (III)

worin M ein Metall der Hauptgruppen III bis V oder der Nebengruppen II bis IV des Periodensystems der Elemente ist, X wie in Formel (I) definiert ist, wobei zwei Gruppen X durch eine Oxogruppe ersetzt sein können, und a der Wertigkeit des Elements entspricht.

Beispiele für derartige Metallverbindungen sind Verbindungen von glas- oder keramikbildenden Elementen

M aus den Hauptgruppen III bis V und/oder den Nebengruppen II bis IV des Periodensystems der Elemente. Vorzugsweise handelt es sich dabei um hydrolysierbare Verbindungen von Al, B, Sn, Ti, Zr, V oder Zn, insbesondere solche von Al, Ti oder Zr, oder Mischungen aus zwei oder mehreren dieser Elemente. Ebenfalls einsetzbar sind z. B. hydrolysierbare Verbindungen von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können verwendet werden.

Bevorzugte Metallverbindungen sind z. B. die Alkoxide von Na, K, Al, Zr und Ti. Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O-i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylheXOxy)₄, sowie Zr-Verbindungen, die komplexierende Reste aufweisen, wie z.B. β-Diketon- und (Meth)acrylreste, Natriumethanolat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

Die Hydrolysate oder Vorkondensate des Konsolidierungsmittels werden aus den Silanen bzw. hydrolysierbaren Verbindungen durch Hydrolyse und Kondensation erhalten. Unter Hydrolysaten oder Vorkondensaten werden dabei insbesondere hydrolysierte bzw. zumindest teilweise kondensierte Verbindungen der hydrolysierbaren Ausgangsverbindungen verstanden. Statt der hydrolysierbaren Monomerverbindungen können auch bereits vorkondensierte Verbindungen eingesetzt werden. Derartige, im Reaktionsmedium vorzugsweise lösliche Oligomere können z.B. geradkettige oder cyclische niedermolekulare Teilkondensate (z.B. Polyorganosiloxane) mit einem Kondensationsgrad von z.B. etwa 2 bis 100, insbesondere etwa 2 bis 6, sein.

Die Hydrolysate oder Vorkondensate werden vorzugsweise durch Hydrolyse und Kondensation der hydrolysierbaren Ausgangsverbindungen nach dem Sol-Gel-Verfahren erhalten. Beim Sol-Gel-Verfahren werden die hydrolysierbaren Verbindungen mit Wasser, gegebenenfalls in Gegenwart von sauren oder basischen Katalyse, hydrolysiert und zumindest teilweise kondensiert. Vorzugsweise erfolgt die

Hydrolyse und Kondensation in Gegenwart saurer Kondensationskatalysatoren (z.B. Salzsäure, Phosphorsäure oder Ameisensäure) bei einem pH-Wert von vorzugsweise 1 bis 3. Das sich bildende Sol kann durch geeignete Parameter, z.B. Kondensationsgrad, Lösungsmittel oder pH-Wert, auf die für das Konsolidierungsmittel gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit weniger als 0,5 Mol Wasser, insbesondere 0,35 bis 0,45 Mol Wasser, pro Mol der vorhandenen hydrolysierbaren Gruppen erzielt.

Vor der Anwendung kann das Konsolidierungsmittel durch Zusatz einer weiteren Wassermenge aktiviert werden.

Das erfindungsgemäße Konsolidierungsmittel liegt gewöhnlich partikelfrei als Lösung oder Emulsion vor. Es kann herkömmliche Additive enthalten, z. B. Lösungsmittel wie Wasser, Alkohole, vorzugsweise niedere aliphatische Alkohole (C₁-C₈-Alkohole), wie Methanol, Ethanol, 1-propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₈-Alkoholen, Amide, wie Dimethylformamid, Tetrahydrofuran, Dioxan, Sulfoxide, Sulfone oder Butylglycol und deren Gemische. Bevorzugt werden Wasser und Alkohole verwendet. Es können auch hochsiedende Lösungsmittel eingesetzt werden; z.B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Heteroaromaten und halogenierte Kohlenwasserstoffe.

Andere herkömmliche Additive sind z. B. Farbstoffe, Pigmente, Viskositätsregulatoren und Tenside. Für die Herstellung von Emulsionen des Konsolidierungsmittels können die bei Siliconemulsionen üblichen stabilisierenden Emulgatoren wie z. B. Tween® 80 und Brij® 30 herangezogen werden.

Zur Herstellung von konsolidierten Formkörpern kann man entweder das Konsolidierungsmittel mit einem zu konsolidierenden partikulären Material vermengen oder das zu konsolidierende Material mit dem Konsolidierungsmittel beschichten. Die eigentliche Konsolidierung (Härtung) kann z. B. thermisch durch Zufuhr von Wärme erfolgen. Eine andere Art der Härtung ist die Zufuhr von Kondensationskatalysatoren, die eine Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen, aber auch Fluoridionen oder Alkoxide von rasch reagierenden Metallen wie z. B. Titanalkoholate, Zinnalkoholate oder Zirkonalkoholate. Bei Verwendung von Ausgangsverbindungen mit polymerisierbaren oder polykondensierbaren Gruppen wie z. B. Methacryloxygruppen oder Epoxidgruppen kann der Polymerisations-, Polyadditions- oder Polykondensationsprozess durch Zugabe thermischer Initiatoren oder Radikalstarter initiiert werden.

Das erfindungsgemäße Konsolidierungsmittel eignet sich zum Konsolidieren beliebiger anorganischer Feststoffe von Pulver-, Granulat-, Pellet-, Faser- oder ähnlicher partikulärer Form. Dabei kann sich z. B. um sub-µm große Partikel handeln oder auch um Partikel im mm-Bereich und darüber. Andere einsetzbare Festkörper sind z. B. Mikrohohlglaskugeln oder Fasern wie sie z.B. zur Herstellung von Bremsbelägen angewandt werden. Es kommen sowohl natürliche Materialien, die z. B. mineralischer Natur sein können, als auch Metalle oder z. B. künstlich hergestellte Formkörper aus Feinstmetallpulvern, aus keramischen Pulvern, aus Glas oder aus Kombinationen von beiden wie z. B. Glaskeramik oder Cermets in Frage.

Eine besondere Art von konsolidierten Formkörpern sind die bei der Off-shore-Erdölförderung angewandten sogenannten "Proppants", d.h. Pellets, die in Kanäle der ölführenden geologischen Formation eingebracht werden, um diese freizuhalten und die Förderleistung zu stabilisieren.

Das erfindungsgemäße Konsolidierungsmittel kann mit Vorteil bei der Erdölförderung, insbesondere der Off-shore-Förderung, angewandt werden, indem man das Konsolidierungsmittel in die ölführende geologische Formation infiltriert oder injiziert und das Konsolidierungsmittel thermisch, durch Zufuhr von Kondensationskatalysatoren und/oder Polymerisationsinitiatoren härtet.

Das erfindungsgemäße Konsolidierungsmittel ermöglicht aufgrund seiner chemischen Konstitution eine schnelle und wirksame Verfestigung der ölführenden, meist sandhaltigen geologischen Formationen. In diesem Zusammenhang hat sich der Einsatz von Phenylsilanalkoxiden besonders bewährt. Dies beruht vermutlich darauf, dass diese Verbindungen aufgrund der sterischen Hinderung der Phenylgruppe und der elektronischen Effekte nicht rasch abreagierbare OH-Gruppen aufweisen, die sich besonders gut mit der Oberfläche von anorganischen Materialien verbinden. Weiter wurde gefunden, dass sich solche Systeme auch besonders gut für ölverschmutzte Partikel eignen, da das Konsolidierungsmittel die Ölschicht auf der anorganischen Oberfläche unterwandern und ablösen kann, wodurch Brückenbindungen zwischen benachbarten Granulatteilchen ermöglicht werden. Letzteres hat den zusätzlichen Effekt, dass solche Systeme auch dazu geeignet sind, Fette und Öle von anorganischen Oberflächen abzulösen und z. B. den Austrag solcher Substanzen aus den Zwickeln von Sandschüttungen oder auch geologischen Formationen zu verbessern. Es gelingt somit, Bindungsprozesse in ölhaltigen Sanden zu realisieren und solche Sande von Öl zu reinigen.

Die folgenden Beispiele erläutern die Erfindung.

### Beispiel 1

### Herstellung eines partikelfreien Konsolidierungsmittels zur Verfestigung ölhaltiger Sande

13,75 g Methyltriethoxysilan (MTEOS) und 64,33 g Tetraethoxysilan (TEOS) werden gemischt und unter starkem Rühren mit 22,15 g deionisiertem Wasser und 0,22 ml konzentrierter Salzsäure (37%) zur Reaktion gebracht. Nach dem Umschlagspunkt überschreitet das Reaktionsgemisch ein Temperaturmaximum von 73°C. Nach Abkühlen der Reaktionsmischung auf 58°C wird eine weitere Silanmischung bestehend aus 22,1 g Phenyltriethoxysilan, 49,1 g MTEOS und 19,1 g TEOS zu dem Ansatz gegeben und noch 5 Minuten weitergerührt. Nach Stehen über Nacht wird der Ansatz mit 0,25 ml einer ethanolischen (21 Gew.%) Na-Ethanolatlösung auf einen pH-Wert von ca. 3 eingestellt.

Vor der Verarbeitung werden dem Konsolidierungsmittel 5 Gew.% Wasser zur Aktivierung zugesetzt. Das aktivierte Konsolidierungsmittel kann zur Verfestigung ölhaltiger Sande verwendet werden. Dazu wird beispielsweise 100 g Sand H33 mit 10 g einer Öl/Grundwasser (Gewichtsverhältnis 8:2) enthaltenden Mischung homogen vermischt, dem so vorbehandelten Sand werden anschließend 12 g aktiviertes Konsolidierungsmittel zugesetzt und homogen verteilt. Nach Abdampfen des Ethanols wird die erhaltende Mischung in eine Form gepackt, an einer Presse verdichtet und bei 150°C über Nacht ausgehärtet. Die erhaltenden Formkörper zeigen Druckfestigkeiten im Bereich von 2,3 MPa sowie nach 4-stündiger Extraktion des Öls mit Toluol und Trocknung bei 120°C über Nacht eine Porosität zwischen 36 und 40%.

### Beispiel 2

### Herstellung eines partikelfreien Konsolidierungsmittels zur Verfestigung von Sand

13,75 g MTEOS und 64,33 g TEOS werden gemischt und unter starkem Rühren mit 22,15 g deionisiertem Wasser und 0,22 ml konzentrierter Salzsäure (37%) zur Reaktion gebracht. Nach dem Umschlagspunkt überschreitet das Reaktionsgemisch ein Temperaturmaximum von 73°C. Nach Abkühlen der Reaktionsmischung auf 58°C wird eine weitere Silanmischung bestehend aus 22,1 g Phenyltriethoxysilan, 49,1 g MTEOS und 19,1 g TEOS zu dem Ansatz gegeben und noch 5 Minuten weitergerührt. Nach Stehen über Nacht wird der Ansatz mit 0,25 ml einer ethanolischen (21 Gew.%) Na-Ethanolatlösung auf einen pH-Wert von ca. 3 eingestellt.

Vor der Verarbeitung werden dem Konsolidierungsmittel 5 Gew.% Wasser zur Aktivierung zugesetzt. Dieses aktivierte Konsolidierungsmittel kann zur Verfestigung von Sand verwendet werden. Dazu werden beispielsweise zu 100 g Sand 12 g aktiviertes Konsolidierungsmittel zugesetzt und homogen vermischt. Nach Abdampfen des Ethanols wird die erhaltene Mischung in eine Form gepackt, an einer Presse verdichtet und bei 150°C über Nacht ausgehärtet.

### Beispiel 3

### Herstellung eines partikelfreien Konsolidierungsmittels zur Verfestigung von Granulaten

13,75 g MTEOS und 64,33 g TEOS werden gemischt und unter starkem Rühren mit 22,15 g deionisiertem Wasser und 0,22 ml konzentrierter Salzsäure (37%) zur Reaktion gebracht. Nach dem Umschlagspunkt überschreitet das Reaktionsgemisch ein Temperaturmaximum von 73°C. Nach Abkühlen der Reaktionsmischung auf 58°C wird eine weitere Silanmischung bestehend aus 22,1 g Phenyltriethoxysilan, 49,1 g MTEOS und 19,1 g TEOS zu dem Ansatz gegeben und noch 5 Minuten weitergerührt. Nach Stehen über Nacht wird der Ansatz mit 0,25 ml einer ethanolischen (21 Gew.%) Na-Ethanolatlösung auf einen pH-Wert von ca. 3 eingestellt.

Vor der Verarbeitung werden dem Konsolidierungsmittel 5 Gew.% Wasser zur Aktivierung zugesetzt. Dieses aktivierte Konsolidierungsmittel kann zur Verfestigung von Granulat verwendet werden. Dazu werden zu 100 g Granulat 12 g aktiviertes Konsolidierungsmittel zugesetzt und homogen vermischt. Nach Abdampfen des Ethanols wird die erhaltene Mischung in eine Form gepackt, an einer Presse verdichtet und bei 150°C über Nacht ausgehärtet.

### Beispiel 4

### Herstellung eines partikelfreien Konsolidierungsmittels zur Verfestigung von ölhaltigen Granulaten

13,75 g MTEOS und 64,33 g TEOS werden gemischt und unter starkem Rühren mit 22,15 g deionisiertem Wasser und 0,22 ml konzentrierter Salzsäure (37%) zur Reaktion gebracht. Nach dem Umschlagspunkt überschreitet das Reaktionsgemisch ein Temperaturmaximum von 73°C. Nach Abkühlen der Reaktionsmischung auf 58°C wird eine weitere Silanmischung bestehend aus 22,1 g Phenyltriethoxysilan, 49,1 g MTEOS und 19,1 g TEOS zu dem Ansatz gegeben und noch 5 Minuten weitergerührt. Nach Stehen über Nacht wird der Ansatz mit 0,25 ml einer ethanolischen (21 Gew.%) Na-Ethanolatlösung auf einen pH-Wert von ca. 3 eingestellt.

Vor der Verarbeitung werden dem Konsolidierungsmittel 5 Gew.% Wasser zur Aktivierung zugesetzt. Dieses aktivierte Konsolidierungsmittel kann zur Verfestigung von ölhaltigen Granulaten verwendet werden. Dazu werden 100 g des Granulats mit 10 g einer Öl/Grundwasser (Gewichtsverhältnis 8:2) enthaltenden Mischung homogen vermischt. Dem so vorbehandelten Granulat werden anschließend 15 g aktiviertes Konsolidierungsmittel zugesetzt und homogen verteilt. Nach Abdampfen des Ethanols wird die erhaltene Mischung in eine Form gepackt, an einer Presse verdichtet und bei 150°C über Nacht ausgehärtet.

### Beispiel 5

### Herstellung eines Beschichtungsmediums zur Veränderung des Benetzungsverhaltens von porösen Sandsteinen gegenüber Öl

a) 236 g des Konsolidierungsmittelansatzes aus Beispiel 1 werden durch Zugabe von 5 Gew.% Wasser auf einen R_{OR}-Wert (Mol Wasser pro Mol hydrolysierbarer Gruppe) von 0,6 eingestellt. Nach 5 min Rühren wird dem Ansatz 7,45 g 1H,1H,2H,2H-Perfluoroctyltriethoxysilan (FTS) zugesetzt. Der Ansatz wird für weitere 30 Minuten gerührt und anschließend durch Zugabe von 0,31 ml einer ethanolischen (21 Gew.%) Na-Ethanolatlösung auf einen pH-Wert von ca. 3 eingestellt.

Zur Verwendung als benetzungsregulierendes Konsolidierungsmittel für poröse Sandsteine werden 100 g des Ansatzes mit 220 g Diethylenglycolmonoethylether verdünnt.

## Patentansprüche

1. Partikelfreies Konsolidierungsmittel für Formkörper und geologische Formationen aus porösen oder partikulären Materialien, enthaltend ein Hydrolysat oder Vorkondensat von
(a) mindestens einem Organosilan der allgemeinen Formel (I)
RₙSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat; und
(b) mindestens einem hydrolysierbaren Silan der allgemeinen Formel (II)
SiX₄ (II)
worin die Reste X die vorstehende Bedeutung haben, wobei das Hydrolysat oder Vorkondensat ein Reaktionsprodukt von (a1) einem Alkylsilan, (a2) einem Arylsilan und (b) einem Orthokieselsäureester enthält.

2. Konsolidierungsmittel nach Anspruch 1, **dadurch gekennzeichnet, dass**
das Hydrolysat oder Vorkondensat in Gegenwart einer Metallverbindung der allgemeinen Formel (III)
MXₐ (III)
hergestellt worden ist, worin M ein Metall der Hauptgruppen III bis V oder der Nebengruppen II bis IV des Periodensystems der Elemente ist, X wie in Formel (I) definiert ist, wobei zwei Gruppen X durch eine Oxogruppe ersetzt sein können, und a der Wertigkeit des Elements entspricht.

3. Konsolidierungsmittel nach einem der vorangehenden Ansprüche, **dadurch gekennzeichnet, dass**
es nach dem Sol-Gel-Verfahren mit einer unterstöchiometrischen Wassermenge, bezogen auf die vorhandenen hydrolysierbaren Gruppen, hergestellt worden ist.

4. Konsolidierungsmittel nach einem der vorangehenden Ansprüche, **dadurch gekennzeichnet, dass**
es vor der Anwendung durch Zusatz einer Wassermenge aktiviert worden ist.

5. Konsolidierungsmittel nach einem der vorangehenden Ansprüche, **dadurch gekennzeichnet, dass**
es als Lösung oder Emulsion vorliegt.

6. Verfahren zur Herstellung von konsolidierten Formkörpern, **dadurch gekennzeichnet, dass**
man ein partikelfreies Konsolidierungsmittel enthaltend ein Hydrolysat oder Vorkondensat von
(a) mindestens einem Organosilan der allgemeinen Formel (I)
RₙSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat; und gegebenenfalls
(b) mindestens einem hydrolysierbaren Silan der allgemeinen Formel (II)
SiX₄ (II)
worin die Reste X die vorstehende Bedeutung haben,
mit einem zu konsolidierenden porösen oder partikulären Material vermengt oder das zu konsolidierende Material mit dem Konsolidierungsmittel beschichtet und das Konsolidierungsmittel härtet.

7. Verfahren nach Anspruch 6, **dadurch gekennzeichnet, dass** das Hydrolysat oder Vorkondensat ein Reaktionsprodukt von (a1) einem Alkylsilan, (a2) einem Arylsilan und (b) einem Orthokieselsäureester enthält.

8. Verfahren nach einem der Ansprüche 6 oder 7, **dadurch gekennzeichnet, dass**
das Konsolidierungsmittel vor der Anwendung durch Zusatz einer Wassermenge aktiviert wird.

9. Konsolidierte Formkörper, erhältlich nach dem Verfahren von einem der Ansprüche 6 bis 8.

10. Verfahren zur Konsolidierung von porösen oder partikulären geologischen Formationen, **dadurch gekennzeichnet, dass**
man ein partikelfreies Konsolidierungsmittel enthaltend ein Hydrolysat oder Vorkondensat von
(a) mindestens einem Organosilan der allgemeinen Formel (I)
RₙSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat; und gegebenenfalls
(b) mindestens einem hydrolysierbaren Silan der allgemeinen Formel (II)
SiX₄ (II)
worin die Reste X die vorstehende Bedeutung haben, in die geologische Formation infiltriert oder injiziert und das Konsolidierungsmittel härtet.

11. Verfahren nach Anspruch 10, **dadurch gekennzeichnet, dass** das Hydrolysat oder Vorkondensat ein Reaktionsprodukt von (a1) einem Alkylsilan, (a2) einem Arylsilan und (b) einem Orthokieselsäureester enthält.

12. Verfahren nach einem der Ansprüche 10 oder 11, **dadurch gekennzeichnet, dass**
das Konsolidierungsmittel vor der Anwendung durch Zusatz einer Wassermenge aktiviert wird.

13. Verfahren zur Konsolidierung von geologischen Formationen, **dadurch gekennzeichnet, dass** man in Kanäle innerhalb der geologischen Formation konsolidierte Formkörper nach Anspruch 9 einbringt.

## Claims

1. Particle-free consolidant for shaped bodies and geological formations composed of porous or particulate materials, comprising a hydrolysate or precondensate of
(a) at least one organosilane of the general formula (I)
RₙSiX₄₋ₙ (I)
in which the R radicals are the same or different and are each hydrolytically non-eliminable groups, the X radicals are the same or different and are each hydrolytically eliminable groups or hydroxyl groups, and n has the value of 1, 2 or 3; and
(b) at least one hydrolysable silane of the general formula (II)
SiX₄ (II)
in which the X radicals have the above definition, the hydrolysate or precondensate comprising a reaction product of (a1) an alkylsilane, (a2) an arylsilane and (b) an orthosilicic ester.

2. Consolidant according to Claim 1, **characterized in that**
the hydrolysate or precondensate was prepared in the presence of a metal compound of the general formula (III)
MXₐ (III)
in which M is a metal of main groups III to V or of transition groups II to IV of the Periodic Table of the Elements, X is as defined in formula (I), where two X groups may be replaced by one oxo group, and a corresponds to the valency of the element.

3. Consolidant according to either of the preceding claims, **characterized in that**
it was prepared by the sol-gel process with a substoichiometric amount of water, based on the hydrolysable groups present.

4. Consolidant according to any of the preceding claims, **characterized in that**
it was activated prior to use by addition of an amount of water.

5. Consolidant according to any of the preceding claims, **characterized in that**
it is present as a solution or emulsion.

6. Process for producing consolidated shaped bodies, **characterized in that**
a particle-free consolidant
comprising a hydrolysate or precondensate of
(a) at least one organosilane of the general formula (I)
RₙSiX₄₋ₙ (I)
in which the R radicals are the same or different and are each hydrolytically non-eliminable groups, the X radicals are the same or different and are each hydrolytically eliminable groups or hydroxyl groups, and n has the value of 1, 2 or 3; and optionally
(b) at least one hydrolysable silane of the general formula (II)
SiX₄ (II)
in which the X radicals have the above definition,
is blended with a porous or particulate material to be consolidated, or the material to be consolidated is coated with the consolidant and the consolidant is cured.

7. Process according to Claim 6, **characterized in that**
the hydrolysate or precondensate comprises a reaction product of (a1) an alkylsilane, (a2) an arylsilane and (b) an orthosilicic ester.

8. Process according to either of Claims 6 and 7, **characterized in that**
the consolidant is activated prior to use by addition of an amount of water.

9. Consolidated shaped bodies obtainable by the process of any of Claims 6 to 8.

10. Process for consolidating porous or particulate geological formations, **characterized in that**
a particle-free consolidant
comprising a hydrolysate or precondensate of
(a) at least one organosilane of the general formula (I)
RₙSiX₄₋ₙ (I)
in which the R radicals are the same or different and are each hydrolytically non-eliminable groups, the X radicals are the same or different and are each hydrolytically eliminable groups or hydroxyl groups, and n has the value of 1, 2 or 3; and optionally
(b) at least one hydrolysable silane of the general formula (II)
SiX₄ (II)
in which the X radicals have the above definition, is infiltrated or injected into the geological formation and the consolidant is cured.

11. Process according to Claim 10, **characterized in that**
the hydrolysate or precondensate comprises a reaction product of (a1) an alkylsilane, (a2) an arylsilane and (b) an orthosilicic ester.

12. Process according to either of Claims 10 and 11, **characterized in that**
the consolidant is activated prior to use by addition of an amount of water.

13. Process for consolidating geological formations, **characterized in that** consolidated shaped bodies according to Claim 9 are introduced into channels within the geological formation.

## Revendications

1. Agent de consolidation sans particules pour corps moulés et formations géologiques en matériaux poreux ou particulaires, contenant un hydrolysat ou pré-condensat de
(a) au moins un organosilane de formule générale (I)
RₙSiX₄₋ₙ (I)
dans laquelle les radicaux R sont identiques ou différents et sont des groupes non clivables par hydrolyse, les radicaux X sont identiques ou différents et sont des groupes clivables par hydrolyse ou des groupes hydroxy, et n a la valeur 1, 2 ou 3 ; et
(b) au moins un silane hydrolysable de formule générale (II)
SiX₄ (II)
dans laquelle les radicaux X ont la signification précédente, l'hydrolysat ou le pré-condensat contenant un produit de réaction de (a1) un alkylsilane, (a2) un arylsilane et (b) un ester de l'acide orthosilicique.

2. Agent de consolidation selon la revendication 1, **caractérisé en ce que** l'hydrolysat ou le pré-condensat a été fabriqué en présence d'un composé métallique de formule générale (III)
MXₐ (III)
dans laquelle M représente un métal des groupes principaux III à V ou des groupes de transition II à IV du tableau périodique des éléments, X est défini comme dans la formule (I), deux groupes X pouvant être remplacés par un groupe oxo, et a correspond à la valence de l'élément.

3. Agent de consolidation selon l'une quelconque des revendications précédentes, **caractérisé en ce qu'**il a été fabriqué par le procédé sol-gel avec une quantité d'eau sous-stoechiométrique, par rapport aux groupes hydrolysables présents.

4. Agent de consolidation selon l'une quelconque des revendications précédentes, **caractérisé en ce qu'**il a été activé avant l'utilisation par ajout d'une quantité d'eau.

5. Agent de consolidation selon l'une quelconque des revendications précédentes, **caractérisé en ce qu'**il se présente sous la forme d'une solution ou d'une émulsion.

6. Procédé de fabrication de corps moulés consolidés, **caractérisé en ce qu'**un agent de consolidation sans particules contenant un hydrolysat ou un pré-condensat de
(a) au moins un organosilane de formule générale (I)
RₙSiX₄₋ₙ (I)
dans laquelle les radicaux R sont identiques ou différents et sont des groupes non clivables par hydrolyse, les radicaux X sont identiques ou différents et sont des groupes clivables par hydrolyse ou des groupes hydroxy, et n a la valeur 1, 2 ou 3 ; et éventuellement
(b) au moins un silane hydrolysable de formule générale (II)
SiX₄ (II)
dans laquelle les radicaux X ont la signification précédente,
est mélangé avec un matériau poreux ou particulaire à consolider ou le matériau à consolider est revêtu avec l'agent de consolidation et l'agent de consolidation est durci.

7. Procédé selon la revendication 6, **caractérisé en ce que** l'hydrolysat ou le pré-condensat contient un produit de réaction de (a1) un alkylsilane, (a2) un arylsilane et (b) un ester de l'acide orthosilicique.

8. Procédé selon l'une quelconque des revendications 6 ou 7, **caractérisé en ce que** l'agent de consolidation est activé avant l'utilisation par ajout d'une quantité d'eau.

9. Corps moulés consolidés, pouvant être obtenus par le procédé selon l'une quelconque des revendications 6 à 8.

10. Procédé de consolidation de formations géologiques poreuses ou particulaires, **caractérisé en ce qu'**un agent de consolidation sans particules contenant un hydrolysat ou un pré-condensat de
(a) au moins un organosilane de formule générale (I)
RₙSiX₄₋ₙ (I)
dans laquelle les radicaux R sont identiques ou différents et sont des groupes non clivables par hydrolyse, les radicaux X sont identiques ou différents et sont des groupes clivables par hydrolyse ou des groupes hydroxy, et n a la valeur 1, 2 ou 3 ; et éventuellement
(b) au moins un silane hydrolysable de formule générale (II)
SiX₄ (II)
dans laquelle les radicaux X ont la signification précédente,
est infiltré ou injecté dans la formation géologique et l'agent de consolidation est durci.

11. Procédé selon la revendication 10, **caractérisé en ce que** l'hydrolysat ou le pré-condensat contient un produit de réaction de (a1) un alkylsilane, (a2) un arylsilane et (b) un ester de l'acide orthosilicique.

12. Procédé selon l'une quelconque des revendications 10 ou 11, **caractérisé en ce que** l'agent de consolidation est activé avant l'utilisation par ajout d'une quantité d'eau.

13. Procédé de consolidation de formations géologiques, **caractérisé en ce que** des corps moulés consolidés selon la revendication 9 sont introduits dans des canaux dans la formation géologique.
